# EUROPÄISCHE PATENTANMELDUNG

(11) **EP 1 703 180 A2**
(43) Veröffentlichungstag der Anmeldung: **20.09.2006**
(21) Anmeldenummer: 06003333.9
(22) Anmeldetag: 18.02.2006
(51) Int. Cl.: F16H 61/28

(54) **Verfahren zum Referenzieren einer Betätigungsvorrichtung eines Schaltaktors eines automatisierten Schaltgetriebes sowie eine Betätigungsvorrichtung**

(30) Priorität: 16.03.2005 DE 102005012035
(71) Anmelder: LuK Lamellen und Kupplungsbau Beteiligungs KG, 77815 Bühl (DE)
(72) Erfinder: Küpper, Klaus, Dr., 77815 Bühl (DE)

(57) **Zusammenfassung**

Bei einem Verfahren zum Referenzieren einer einen Inkrementalsensor enthaltenden Betätigungsvorrichtung eines automatisierten Schaltgetriebes wird eine in einem das Getriebe enthaltenden Antriebsstrang eines Fahrzeugs enthaltene, eine Drehmomentübertragung zwischen einem Antriebsmotor und wenigstens einem Fahrzeugrad herbeiführende, von einem Kupplungsaktor betätigte Kupplung auf die Übertragung eines geringen Drehmoments eingestellt, wenn ein Schaltaktor der Betätigungsvorrichtung zum Zweck einer Referenzierung das Getriebe in Richtung des Einlegens eines Ganges betätigt.

## Beschreibung

Die Erfindung betrifft ein Verfahren zum Referenzieren einer einen Inkrementalsensor enthaltenden Betätigungsvorrichtung eines Schaltaktors eines automatisierten Schaltgetriebes. Die Erfindung betrifft weiter eine Betätigungsvorrichtung für eine in einem Antriebsstrang eines Kraftfahrzeugs enthaltene Reihenanordnung aus einer Kupplung und einem automatisierten Schaltgetriebe.

Ein automatisiertes Schaltgetriebe wird im Allgemeinen von einem Wählaktor und einem Schaltaktor betätigt, wobei mit dem Wählaktor Ganggassen vorgewählt werden, innerhalb derer von dem Schaltaktor Gänge eingelegt oder ausgelegt werden. Für eine rasche und präzise Schaltung ist es insbesondere erforderlich, die genaue Stellung des Schaltaktors bzw. eines von diesem betätigten Schaltgliedes zu kennen. Die Stellung des Schaltaktors bzw. eines von diesem betätigten Schaltgliedes wird im Allgemeinen mittels eines Inkrementalsensors erfasst, der beispielsweise eine in eine Linearbewegung umgesetzte Drehung in Form von Winkelinkrementen zählt und seinen Zählstand je nach Drehrichtung mit jedem Winkelinkrement um 1 vergrößert oder verkleinert. Um aus dem Zählstand auf die Absolutstellung schließen zu können, ist die Kenntnis einer Referenzstellung erforderlich, ausgehend von der dann bei Kenntnis der Veränderung des Zählstandes die Absolutstellung ermittelt werden kann.

Wenn beispielsweise nach einem Reset oder infolge eines Systemfehlers die Referenzstellung bzw. der der Referenzstellung entsprechende Zählstand verloren geht, muss neu referenziert werden, indem das Schaltglied mittels des Aktors zu einer oder mehreren Referenzstellungen bewegt wird, die erkannt werden und deren Zählstand gespeichert wird. Wenn zunächst keinerlei Positionsinformation vorliegt, kann es bei einem Tasten in Schaltrichtung bzw. Bewegen des Schaltgliedes in Richtung des Einlegens eines Ganges vorkommen, dass gegen eine Synchronisierung des jeweiligen Ganges getastet wird. Wenn dieses Tasten zum Einlegen eines der Fahrgeschwindigkeit nicht angepassten Ganges führt, beispielsweise Einlegen des ersten Ganges bei einer Fahrgeschwindigkeit von 100 km/h, können gravierende Getriebebeschädigungen erfolgen.

Der Erfindung liegt die Aufgabe zugrunde, die Sicherheit eines Getriebes vor Beschädigungen in Folge des Einlegens eines unzulässigen Gangs beim Referenzieren zu verbessern.

Eine Lösung dieser Aufgabe wird mit einem Verfahren zum Referenzieren einer einen Inkrementalsensor enthaltenden Betätigungsvorrichtung eines automatisierten Schaltgetriebes erzielt, bei welchem Verfahren eine in einem das Getriebe enthaltenden Antriebsstrang eines Fahrzeugs enthaltene, eine Drehmomentübertragung zwischen einem Antriebsmotor und wenigstens einem Fahrzeugrad herbeiführende, von einem Kupplungsaktor betätigte Kupplung auf die Übertragung eines geringen Drehmoments eingestellt wird, wenn ein Schaltaktor der Betätigungsvorrichtung zum Zweck einer Referenzierung das Getriebe in Richtung des Einlegens eines Ganges betätigt. Dabei kann der Kupplungsaktor auch von einem Hydraulikkreis gebildet werden, beispielsweise von einem mit Druck beaufschlagten Kolben, wobei der Druck mittels eines Druck- oder Volumenstromregelventils wie Proportionalventil gesteuert wird.

Mit dem erfindungsgemäßen Verfahren wird erreicht, dass die mit der Kupplung in ein geringes Drehmoment übertragender Weise verbundene Eingangswelle des Getriebes mit einer zulässigen, durch die Motordrehzahl gegebene Drehzahl läuft, die bei einer ansatzweise bzw. kurzzeitig erfolgenden Synchronisierung stabilisiert ist, so dass Beschädigungen in Folge einer unzulässig hohen Drehzahl der Eingangswelle vermieden werden.

Vorteilhafterweise wird das von der Kupplung übertragene Moment mit abnehmender Fahrzeuggeschwindigkeit auf einen kleineren Wert eingestellt.

Bevorzugt wird weiter eine Durchführungsform des erfindungsgemäßen Verfahrens, bei der das geringe Drehmoment mittels des Kupplungsaktors zur Betätigung der Kupplung eingestellt wird.

Alternativ und/oder zusätzlich kann das geringe Drehmoment durch Steuerung des Volumenstroms einer zwischen Kupplungsscheiben hindurchströmenden Flüssigkeit einer Wirbelstromkopplung oder dergleichen eingestellt werden.

Eine Betätigungsvorrichtung für eine in einem Antriebsstrang eines Kraftfahrzeugs enthaltene Reihenanordnung aus einer Kupplung und einem automatisierten Schaltgetriebe, mit der die Erfindungsaufgabe gelöst wird, enthält einen Kupplungsaktor zum Betätigen der Kupplung, einen Schaltaktor zum Ein- und Auslegen von Gängen des Schaltgetriebes durch Bewegen eines Schaltgliedes, einen Inkrementalsensor zum Erfassen der Bewegung des Schaltgliedes, Mittel zum Referenzieren des Zählstandes des Inkrementalsensors und eine elektronische Steuereinrichtung zum Steuern des Betriebs des Kupplungsaktors und des Schaltaktors entsprechend einem vorbestimmten Programm, welche elektronische Steuereinrichtung den Kupplungsaktor bei einem Referenzieren nach einem der vorgenannten Verfahren ansteuert.

Eine Weiterbildung der erfindungsgemäßen Betätigungsvorrichtung enthält eine von der elektronischen Steuereinrichtung ansteuerbare Einrichtung zum Steuern eines die Kupplung durchströmenden Kühlflüssigkeitsstroms, wobei die elektronische Steuereinrichtung die Einrichtung zum Steuern des die Kupplung durchströmenden Kühlflüssigkeitsstroms derart steuert, dass das geringe Drehmoment durch Steuerung des Volumenstroms der zwischen Kupplungsscheiben hindurchströmenden Kühlflüssigkeit eingestellt wird.

Die Erfindung eignet sich zur Anwendung in allen Arten von Antriebssträngen, bei denen das Referenzieren eines Getriebeaktors in Unkenntnis des jeweiligen Gangs zu unzulässigen Drehzahlen oder sonstigen gefährlichen Beanspruchungen führen kann, die dadurch vermieden werden können, dass eine im Antriebsstrang enthaltene Kupplung für die Übertragung eines geringen Drehmoments eingestellt wird. Bei Doppelkupplungsgetrieben bzw. Parallelschaltgetrieben wird die jeweilige Kupplung auf die Übertragung eines geringen Drehmoments eingestellt, die derjenigen Getriebeeinheit zugeordnet ist, in der ein Gang eingelegt wird. Ist der potentiell einzulegende Gang unbekannt, wird bei beiden Kupplungen das geringe Drehmoment eingestellt.

Die Erfindung wird im Folgenden anhand einer Figur, die ein Prinzipschaltbild eines Fahrzeugantriebsstrangs darstellt, beispielsweise und mit weiteren Einzelheiten erläutert.

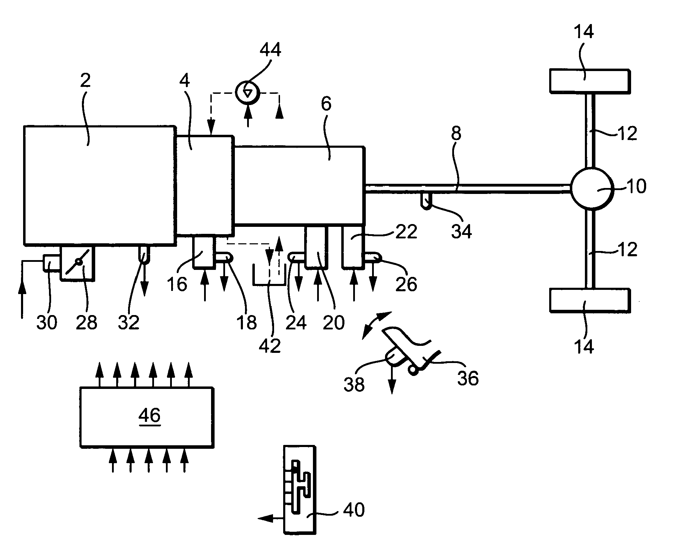

Gemäß der einzigen Figur ist eine Brennkraftmaschine 2 über eine Kupplung 4 mit einem Schaltgetriebe 6 verbunden, dessen Ausgangswelle mit einer Kardanwelle 8 drehfest verbunden ist, die über ein Differential 10 Antriebswellen 12 antreibt, die mit angetriebenen Rädern 14 drehfest verbunden sind.

Die Kupplung 4 ist beispielsweise eine flüssigkeitsgekühlte Reibungskupplung mit Kupplungsscheiben, die mittels eines Kupplungsaktors 16 in gegenseitige Reibberührung gebracht werden können, so dass eine Drehmomentübertragung zwischen der Brennkraftmaschine 2 und einer Eingangswelle des Schaltgetriebes 6 erfolgt. Die Stellung des Kupplungsaktors 16 bzw. eines von diesem betätigten Kupplungshebels wird vorteilhafterweise von einem Stellungssensor 18 erfasst, da für ein einwandfreies Anfahren und präzise Schaltungen das jeweils übertragbare Kupplungsmoment, das von der Stellung des Kupplungshebels sowie gegebenenfalls vom Verschleißzustand der Kupplung abhängt, genau gesteuert werden muss.

Bei dem Getriebe 6 handelt es sich beispielsweise um ein Schaltgetriebe, bei dem zwischen einer Eingangswelle und einer Ausgangswelle ein Dreheingriff durch das Schalten unterschiedlicher Radsätze bewirkt wird. Das Getriebe weist in an sich bekannter Weise einen Wählaktor 20 und einen Schaltaktor 22 auf, wobei mit dem Wählaktor 20 ein Wählglied in unterschiedliche Schaltgassen bewegt wird, so dass mit einem Schaltglied 22 diesen Schaltgassen zugeordnete Gänge schaltbar sind.

Da sowohl der Wählvorgang als auch der Schaltvorgang genau gesteuert werden müssen, wird die Stellung des Wählaktors bzw. des Wählgliedes von einem Stellungssensor 24 und die des Schaltaktors bzw. Schaltgliedes von einem Stellungssensor 26 erfasst.

Die Brennkraftmaschine 2 weist zu ihrer Leistungssteuerung ein Leistungsstellglied 28 auf, das von einem Aktor 30 betätigt wird.

Die Drehzahl der Brennkraftmaschine 2 wird von einem Drehzahlsensor 32 erfasst. Die Drehzahl der Kardanwelle 8 bzw. der Getriebeausgangswelle wird von einem Drehzahlsensor 34 erfasst.

Die Stellung eines Fahrpedals 36 wird von einem Stellungssensor 38 erfasst. Mit einer Wähleinheit 40 können verschiedene Gänge bzw. Fahrprogramme gewählt werden.

Zur Flüssigkeitskühlung der Kupplung 4 ist ein Kühlflüssigkeitskreislauf vorgesehen, der Kühlflüssigkeit, beispielsweise Getriebeöl, aus einem Sumpf 42 mittels einer Pumpe 44 durch die Kupplung hindurch umpumpt.

Zur Steuerung des gesamten Antriebsstrangs ist eine elektronische Steuereinrichtung 46 mit wenigstens einem Mikroprozessor, Daten- und Programmspeicher vorgesehen, deren Eingänge mit Sensoren bzw. Signalgebern des Antriebsstrangs verbunden sind und deren Ausgänge mit den Aktoren verbunden sind. Es versteht sich, dass weitere oder andere Sensoren als die beschriebenen vorgesehen sein können und ebenfalls weitere oder andere Aktoren vorgesehen sein können.

Aufbau und Funktion des beschriebenen Antriebsstrangs sind an sich bekannt und werden daher nicht im Einzelnen erläutert.

Der Stellungssensor 26 des Schaltaktors 22 ist ebenso wie die anderen Stellungssensoren im Allgemeinen ein Inkrementalwinkelsensor, der die Drehung eines in dem Schaltaktor 22 enthaltenen, von einem Elektromotor angetriebenen Drehbauteils abtastet und bei Drehung des Drehbauteils um ein Winkelinkrement ein Signal an die Steuereinrichtung 46 liefert, das je nach Drehrichtung zu einem Aufwärts- oder Abwärtszählen eines Zählstandes führt. Ausgehend von einer oder mehreren Referenzpositionen des von dem Schaltaktor 22 betätigten Schaltgliedes ist in Folge der durch die Übertragungskinematik gegebenen Beziehung zwischen dem Drehwinkel und der Stellung des Schaltgliedes die Absolutposition des Schaltgliedes bekannt. Bei einem Absturz des Systems bzw. einem Reset kann die oder können die Referenzstellungen verloren gehen, so dass sie für eine präzise Funktionstüchtigkeit des Systems erneut ermittelt werden müssen. Eine wichtige Referenzstellung ist diejenige Stellung, bei der durch Bewegen des Schaltgliedes eine Synchronisierung zwischen einem jeweiligen Gangrad und beispielsweise der Drehzahl der zugehörigen Welle erfolgt. Das Erreichen dieses Synchronpunktes macht sich durch einen erhöhten Widerstand bemerkbar, den das Schaltglied einer weiteren Bewegung in Schaltrichtung entgegensetzt, was sich beispielsweise in einem Drehzahlabfall der vom Inkrementalsensor 26 erfassten Drehzahl oder in einer erhöhten Leistungsaufnahme des Schaltaktors 22 bemerkbar macht. Diese Änderungen werden von der elektronischen Steuereinrichtung 46 erfasst und dem jeweiligen Zählstand zugeordnet, so dass der Synchronpunkt referenziert ist.

Ein Problem besteht nun darin, dass bei einer erneut notwendigen Referenzierung der Gang unbekannt sein kann, der bei einer Betätigung eines jeweiligen Schaltgliedes in Richtung des Einlegens eines Ganges eingelegt wird. Wenn das Fahrzeug beispielsweise mit einer Geschwindigkeit von 100 km/h fährt und bei vollständig geöffneter Kupplung 4 beispielsweise der Schaltaktor 22 ein Schaltglied derart bewegt, dass der erste Vorwärtsgang eingelegt wird, würde dies zu einer unzulässig hohen Drehzahl der Getriebeeingangswelle führen, so dass das Getriebe beschädigt würde.

Um zu verhindern, dass die Drehzahl der Getriebeeingangswelle beim Synchronisieren allzu rasch auf eine unzulässig hohe Drehzahl ansteigt, ist es vorteilhaft, die Kupplung 4 während einer Referenzierung derart zu betätigen, dass keine vollständige Trennung zwischen Kurbelwelle und Getriebeeingangswelle vorhanden ist, sondern die Kupplung ein geringes Drehmoment (im vorliegenden Fall Schleppmoment) von beispielsweise weniger als 10 Nm überträgt. Auf diese Weise ist sichergestellt, dass bei einem kurzzeitigen Anfahren der Synchronisierung die mit Motordrehzahl drehende Getriebeeingangswelle ihre Drehzahl nicht in unzulässiger Weise ändert, da sie "weich" an die Drehzahl der Brennkraftmaschine gekoppelt ist.

Vorteilhafterweise kann das von der Kupplung übertragene bzw. übertragbare Moment abhängig von der Fahrzeuggeschwindigkeit eingestellt werden. Insbesondere wenn das Fahrzeug steht oder nur sehr langsam fährt oder der Fahrer bei stehendem oder sehr langsam fahrendem Fahrzeug die Bremse nicht betätigt, sollte das übertragbare Moment sehr klein gewählt werden, beispielsweise unter 5 Nm liegen.

Die bei einer Referenzierung vorteilhafte Einstellung der Kupplung 4 auf eine geringe Drehmomentübertragung muss nicht zwangsläufig mittels des Kupplungsaktors 16 erfolgen, sondern kann ergänzend oder ausschließlich dadurch erfolgen, dass der Kühlflüssigkeitsstrom durch die Kupplung 4 hindurch auf hohen Durchsatz eingestellt wird, indem beispielsweise die Leistung der Pumpe 44 verändert wird oder bei einer Kupplung, deren Kühlflüssigkeitsströmung allein durch die Drehzahl der Kupplung und die dadurch bedingte radiale Strömung der Kühlflüssigkeit aufrecht erhalten wird, der Querschnitt einer Durchströmöffnung verändert wird. Die durch die Viskosität der zwischen den Kupplungsscheiben hindurch strömenden Kühlflüssigkeit bewirkte Drehmomentübertragung zwischen der bzw. den Reib- und Kupplungsscheiben hängt von dem Durchsatz an Kühlflüssigkeit ab.

### Bezugszeichenliste

- 2: Brennkraftmaschine
- 4: Kupplung
- 6: Schaltgetriebe
- 8: Kardanwelle
- 10: Differential
- 12: Antriebswelle
- 14: Rad
- 16: Kupplungsaktor
- 18: Stellungssensor
- 20: Wählaktor
- 22: Schaltaktor
- 24: Stellungssensor
- 26: Stellungssensor
- 28: Leistungsstellglied
- 30: Aktor
- 32: Drehzahlsensor
- 34: Drehzahlsensor
- 36: Fahrpedal
- 38: Stellungssensor
- 40: Wähleinheit
- 42: Sumpf
- 44: Pumpe
- 46: Steuereinrichtung

## Patentansprüche

1. Verfahren zum Referenzieren einer einen Inkrementalsensor (26) enthaltenden Betätigungsvorrichtung (20, 22) eines automatisierten Schaltgetriebes (6), bei welchem Verfahren eine in einem das Getriebe enthaltenden Antriebsstrang (2, 4, 6) eines Fahrzeugs enthaltene, eine Drehmomentübertragung zwischen einem Antriebsmotor (2) und wenigstens einem Fahrzeugrad (14) herbeiführende, von einem Kupplungsaktor (16) betätigte Kupplung (4) auf die Übertragung eines geringen Drehmoments eingestellt wird, wenn ein Schaltaktor (22) der Betätigungsvorrichtung (20, 22) zum Zweck einer Referenzierung das Getriebe (6) in Richtung des Einlegens eines Gangs betätigt.

2. Verfahren nach Anspruch 1, wobei das von der Kupplung (4) übertragene Moment mit abnehmender Fahrzeuggeschwindigkeit auf einen kleineren Wert eingestellt wird.

3. Verfahren nach Anspruch 1 oder 2, wobei das geringe Drehmoment mittels des Kupplungsaktors (16) zur Betätigung der Kupplung (4) eingestellt wird.

4. Verfahren nach einem der Ansprüche 1 bis 3, wobei das geringe Drehmoment durch Steuerung des Volumenstroms einer zwischen Kupplungsscheiben hindurchströmenden Kühlflüssigkeit eingestellt wird.

5. Betätigungsvorrichtung für eine in einem Antriebsstrang eines Kraftfahrzeugs enthaltene Reihenanordnung aus einer Kupplung (4) und einem automatisierten Schaltgetriebe (6), enthaltend
einen Kupplungsaktor (16) zum Betätigen der Kupplung (4),
einen Schaltaktor (22) zum Ein- und Auslegen von Gängen des Schaltgetriebes (6) durch Bewegen eines Schaltgliedes,
einen Inkrementalsensor (26) zum Erfassen der Bewegung des Schaltgliedes,
Mittel zum Referenzieren des Zählstandes des Inkrementalsensors und
eine elektronische Steuereinrichtung (46) zum Steuern des Betriebs des Kupplungsaktors und des Schaltaktors entsprechend einem vorbestimmten Programm, welche elektronische Steuereinrichtung den Kupplungsaktor bei einem Referenzieren entsprechend einem Verfahren nach einem der Ansprüche 1 bis 4 ansteuert.

6. Betätigungsvorrichtung nach Anspruch 5, enthaltend eine von der elektronischen Steuereinrichtung (46) ansteuerbare Einrichtung (44) zum Steuern eines die Kupplung (4) durchströmenden Kühlflüssigkeitsstroms, wobei die elektronische Steuereinrichtung die Einrichtung zum Steuern des die Kupplung durchströmenden Kühlflüssigkeitsstroms entsprechend dem Verfahren nach Anspruch 4 steuert.
